# FASCICULE DE BREVET EUROPEEN

(11) **EP 4 227 061 B1**
(45) Date de publication et mention de la délivrance du brevet: **24.09.2025**
(21) Numéro de dépôt: 23156355.2
(22) Date de dépôt: 13.02.2023
(51) Int. Cl.: B29C 45/14, B29C 45/16, B29C 45/37, B29K 75/00, B29L 31/30

(54) **PROCÉDÉ DE FABRICATION D'UN ÉLÉMENT DE GARNISSAGE INTÉRIEUR DE VÉHICULE ET ÉLÉMENT DE GARNISSAGE INTÉRIEUR**
VERFAHREN ZUR HERSTELLUNG EINES FAHRZEUGINNENVERKLEIDUNGSTEILS UND INNENVERKLEIDUNGSTEIL
METHOD FOR PRODUCING AN INTERIOR TRIM PART FOR A VEHICLE AND INTERIOR TRIM PART

(30) Priorité: 15.02.2022 FR 2201313
(43) Date de publication de la demande: 16.08.2023
(73) Titulaire: Faurecia Intérieur Industrie, 92000 Nanterre (FR)
(72) Inventeur: HAFER, Lionel, 57510 Saint-Jean-Rohrbach (FR)
(74) Mandataire: Novagraaf Group

(56) Documents cités:
- DE-A1- 102012 010 493
- DE-A1- 102019 008 780
- FR-A1- 3 022 820
- US-A1- 2010 247 813
- US-A1- 2017 239 861

## Description

La présente invention concerne un procédé de fabrication d'un élément de garnissage intérieur de véhicule. L'invention concerne également un élément de garnissage intérieur de véhicule.

L'invention s'applique par exemple à un élément de garnissage intérieur formant une console centrale, un panneau de porte ou un habillage de planche de bord d'un véhicule ou d'autres types d'éléments de garnissage.

Un tel élément de garnissage peut comprendre une partie décorative et une partie d'interface homme-machine définissant une interface homme-machine munie d'une ou plusieurs zones d'interactions, comme par exemple des interfaces tactiles ou des boutons de commande de fonctionnalités du véhicule.

Il est connu de fabriquer chacune de ces deux parties, par exemple par moulage, indépendamment l'une de l'autre puis de les assembler, afin de former l'élément de garnissage.

Cependant, un tel procédé de fabrication n'est pas entièrement satisfaisant.

En effet, après l'assemblage des deux parties de l'élément de garnissage, leur surfaces avants ne sont généralement pas jointives et un interstice est observé entre les bords adjacents des deux parties.

Cet interstice crée une discontinuité dans le design de l'élément de garnissage. Un tel élément de garnissage présente ainsi un aspect extérieur insatisfaisant.

En outre, une telle discontinuité nuit également à la qualité de l'élément de garnissage.

De plus, un tel procédé de fabrication comprenant au moins deux étapes de moulage et une étape d'assemblage est peu économique, notamment en raison d'un investissement important en machines de production et un nombre d'étapes important.

DE 10 2019 008780 décrit un procédé de fabrication d'un élément fonctionnel de décoration.

Un des buts de l'invention est de proposer un procédé de fabrication d'un élément de garnissage intérieur comprenant deux parties permettant de réaliser un élément de garnissage présentant un aspect extérieur satisfaisant et une qualité satisfaisante, tout en étant économique à fabriquer.

Ainsi, l'invention a pour objet un procédé de fabrication d'un élément de garnissage intérieur de véhicule selon la revendication 1.

Le surmoulage d'une telle couche de revêtement recouvrant la jonction entre les surfaces avants de la première partie et de la deuxième partie donne l'illusion d'une continuité entre les deux parties de l'élément de garnissage, ce qui lui confère un aspect extérieur satisfaisant. En outre, une telle couche de revêtement a également une fonction protectrice de la surface avant des deux parties, ce qui augmente la qualité de l'élément de garnissage.

Des caractéristiques optionnelles sont définies aux revendications 2 à 7.

L'invention concerne également un élément de garnissage intérieur de véhicule suivant la revendication 8.

Des caractéristiques optionnelles sont définies aux revendications 9 à 12.

L'invention sera mieux comprise à la lecture de la description qui suit, donnée à titre d'exemple et faite en référence aux dessins annexés, parmi lesquels :
- la figure 1 est une vue schématique d'un élément de garnissage intérieur selon l'invention ; et
- la figure 2 est une vue en section de l'élément de garnissage intérieur de la figure 1, la section étant réalisée selon le plan P sur la figure 1.

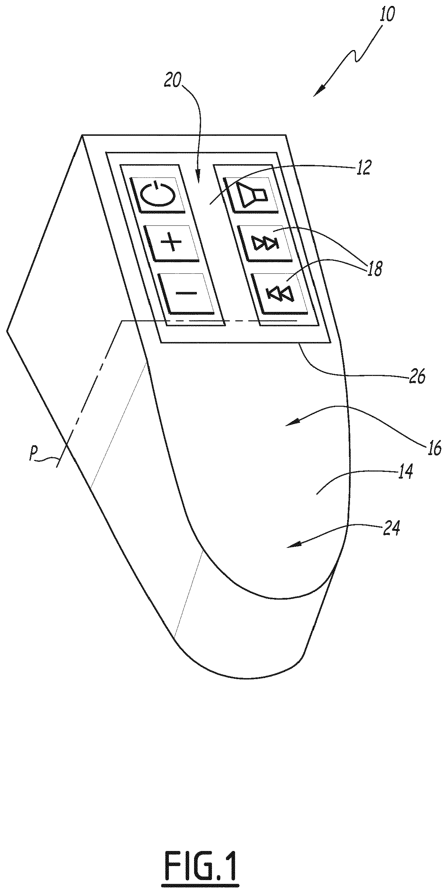

La figure 1 illustre un élément de garnissage intérieur 10 de véhicule de manière schématique. Les proportions ne sont pas respectées.

L'élément de garnissage 10 est destiné à être installé dans l'habitacle d'un véhicule, en particulier d'un véhicule automobile.

L'élément de garnissage 10 est, par exemple, une console centrale de véhicule destinée à être disposée entre deux sièges d'une rangée de sièges du véhicule, par exemple deux sièges avant. En variante, l'élément de garnissage 10 est, par exemple, une planche de bord, un accoudoir ou un panneau de porte.

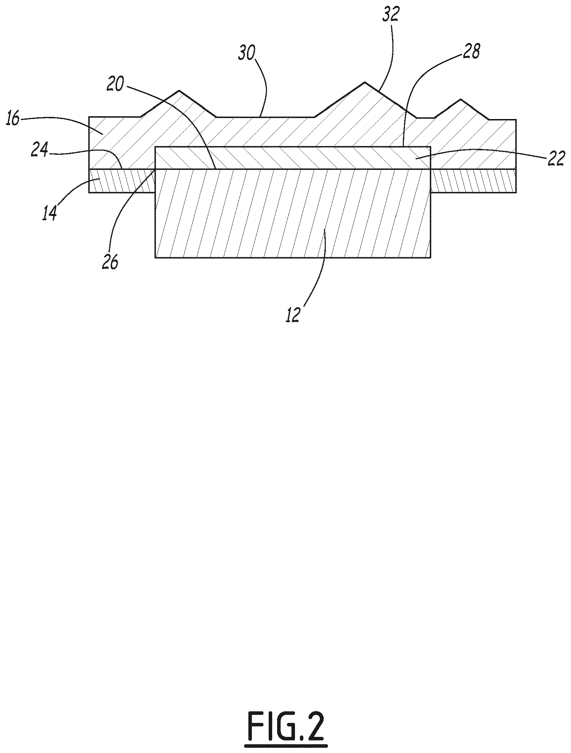

Comme illustré sur la figure 2, l'élément de garnissage 10 comprend une première partie 12, une deuxième partie 14 et une couche de revêtement 16.

La première partie 12 définit, par exemple, une interface homme-machine munie d'une ou plusieurs zones d'interaction 18.

Les zones d'interaction 18 sont par exemple des interfaces tactiles ou des boutons de commande. Chaque zone d'interaction 18 permet, à un passager du véhicule, de commander des fonctionnalités du véhicule, comme le volume de l'autoradio par exemple.

La première partie 12 comprend une surface avant 20, qui est de préférence orientée vers l'intérieur de l'habitacle du véhicule et facilement accessible par les passagers.

La surface avant 20 de la première partie 12 définit ainsi avantageusement la surface visible extérieure de la première partie 12.

Préférablement, les zones d'interaction 18 sont définies sur la surface avant 20 de la première partie 12 de l'élément de garnissage 10.

Avantageusement, la surface avant 20 de la première partie 12 est recouverte au moins partiellement d'un film décoratif 22.

Comme illustré sur la figure 1, le film décoratif 22 permet, par exemple, la disposition d'un logo ou d'un pictogramme sur chaque zone d'interaction 18, afin de donner une indication aux passagers sur la fonctionnalité commandée par ladite zone d'interaction 18.

Un tel film décoratif 22 est par exemple un film en polypropylène, polystyrène, polycarbonate (PC), polytéréphtalate d'éthylène (PET) ou polyméthacrylate de méthyle (PMMA).

Le film 22 comprend avantageusement des pigments donnant la couleur souhaitée à la surface avant 20 de la première partie 12.

Alternativement, le film 22 est transparent ou translucide et des encres sont imprimées sur au moins l'une des faces du film 22, afin de donner l'aspect souhaité à la surface avant 20 de la première partie 12.

Selon un mode de réalisation particulier de l'invention, des encres fonctionnelles sont imprimées sur au moins l'une des faces du film 22, et plus particulièrement sur la face arrière du film 22. Les encres fonctionnelles utilisées sont, par exemple, des encres conductrices, notamment à base d'argent, afin de former sur le film 22 des pistes électriques reliées à des composants électroniques, comme des sources lumineuses par exemple, ou de former des capacités électriques, par exemple pour apporter une fonction de capteur tactile au film 22.

Le film 22 a par exemple une épaisseur comprise entre 100 µm et 1000 µm.

La première partie 12 est réalisée en un premier matériau, et de préférence par moulage dudit premier matériau au dos du film décoratif 22, comme cela sera décrit par la suite.

Le premier matériau est par exemple choisi parmi le polycarbonate, l'acrylonitrile butadiène styrène, le polyamide, polypropylène, polyéthylène, PMMA et leurs potentielles combinaisons.

La deuxième partie 14 de l'élément de garnissage 10 définit, par exemple, une partie structurelle et décorative de l'élément de garnissage 10.

La deuxième partie 14 donne par exemple sa forme générale à l'élément de garnissage 10.

La deuxième partie 14 définit avantageusement des éléments structurels de l'élément de garnissage 10, comme un porte-gobelet par exemple dans le cas où l'élément de garnissage 10 est une console centrale.

La deuxième partie 14 comprend une surface avant 24, de préférence orientée vers l'intérieur de l'habitacle du véhicule et définissant la surface visible extérieure de la deuxième partie 14.

La surface avant 24 a par exemple un aspect extérieur brillant, conférant un aspect valorisant à l'élément de garnissage 10.

La deuxième partie 14 est adjacente et jointive avec la première partie 12.

Autrement dit, le jeu entre les deux parties 12, 14 est sensiblement nul, au niveau de la jonction 26 entre les deux parties 12, 14.

De préférence, la surface avant 24 de la deuxième partie 14 est adjacente et jointive avec la surface avant 20 de la première partie 12.

Autrement dit, la surface avant 24 de la deuxième partie 14 est sensiblement alignée avec la surface avant 20 de la première partie 12. La surface avant 20 de la première partie 12 et la surface avant 24 de la deuxième partie 14 s'étendent en continuité au niveau de la jonction 26.

Alternativement, la surface avant 20 de la première partie 12 et la surface avant 24 de la deuxième partie 14 ne sont pas alignées au niveau de la jonction 26, mais sont décalées en hauteur, par exemple d'une hauteur inférieure à 1 mm.

Comme illustré sur la figure 1, la surface avant 24 de la deuxième partie 14 entoure par exemple complétement la surface avant 20 de la première partie 12.

La jonction 26 entre les deux parties 12, 14 est, dans cas-là, définie au niveau de la périphérie extérieure de la surface avant 20 de la première partie 12.

La deuxième partie 14 est réalisée en un deuxième matériau, et de préférence par moulage dudit deuxième matériau comme cela sera décrit par la suite.

Le deuxième matériau est par exemple identique au premier matériau.

Dans un mode de réalisation particulier de l'invention, le deuxième matériau est différent du premier matériau.

Le deuxième matériau est par exemple choisi parmi le polycarbonate, l'acrylonitrile butadiène styrène, le polyamide, polypropylène, polyéthylène, PMMA et leurs potentielles combinaisons.

La couche de revêtement 16 est disposée en regard des surfaces avants 20, 24 de la première partie 12 et de la deuxième partie 14 de l'élément de garnissage 10, et de préférence recouvre entièrement les deux surfaces avants 20, 24.

En particulier, la couche de revêtement 16 recouvre la jonction 26 entre les deux parties 12, 14.

La couche de revêtement 16 s'étend avantageusement de manière uniforme au-dessus de deux surfaces avants 20, 24 des deux parties 12, 14, donnant une illusion de continuité entre lesdites surfaces avants 20, 24.

La couche de revêtement 16 définit une surface intérieure 28 et une surface extérieure 30.

Comme illustré sur la figure 2, la surface intérieure 28 de la couche de revêtement 16 est tournée vers la surface avant 24 de la deuxième partie 14, ainsi que vers la surface avant 20 de la première partie 12. Elle est ici en contact avec le film décoratif 22 recouvrant la surface avant 20 de la première partie 12.

La surface extérieure 30 est tournée à l'opposé de la première partie 12 et de la deuxième partie 14. Elle définit par exemple la surface extérieure de l'élément de garnissage 10.

La couche de revêtement 16 est de préférence transparente, afin de laisser visible les surfaces avant 20, 24 de la première et de la deuxième partie 12, 14.

Dans un exemple de réalisation, la couche de revêtement 16 comprend des motifs en relief 32 sur sa surface extérieure 30.

Les motifs en relief 32 peuvent avoir toute forme adéquate.

Les motifs en relief 32 forment par exemple des bandes uniformément réparties s'étendant en regard d'au moins une partie de la surface avant 24 de la deuxième partie 14.

Les motifs en relief 32 sont alternativement de forme circulaire et définissent ensemble un motif en regard de la deuxième partie 14.

Les motifs en relief 32 peuvent également définir en relief les logos ou les pictogrammes définis par le film décoratif 22 de la première partie 12.

Les motifs en relief 32 ont par exemple une hauteur comprise entre 0,1 mm et 1 mm.

De tels motifs en relief 32 améliorent l'aspect esthétique extérieur de l'élément de garnissage et peuvent, par exemple, apporter un aspect esthétique extérieur particulier à e l'élément de garnissage, comme un aspect mat par exemple.

La couche de revêtement 16 est réalisée en un matériau de revêtement. Elle et obtenue de préférence en surmoulant le matériau de revêtement sur les surfaces avant 20, 24 de la première partie 12 et de la deuxième partie 14 préalablement moulées.

Le matériau de revêtement est par exemple du polyuréthane, et en en particulier du polyuréthane acrylate (PUA).

Un matériau de revêtement en polyuréthane offre l'avantage de faciliter la formation des motifs en relief 32 directement lors de l'étape de moulage.

La couche de de revêtement 16 a une épaisseur comprise entre 0,3 mm et 3 mm, et de préférence entre 0,6 mm et 1 mm.

Un procédé de fabrication d'un tel élément de garnissage 10 va maintenant être décrit.

Le procédé de fabrication comprend une première étape de moulage de la première partie 12 de l'élément de garnissage 10.

Lorsque la première partie 12 est munie d'un film décoratif 22, la première étape de moulage comprend le moulage du premier matériau au dos du film décoratif 22, de sorte que le film décoratif 22 recouvre la surface avant 20 de la première partie 12.

De préférence, la première étape de moulage est par exemple une étape de moulage par injection.

A cet effet, le premier matériau est de préférence un matériau thermoplastique et est plus particulièrement choisi parmi le polycarbonate, l'acrylonitrile butadiène styrène, le polyamide, polypropylène, polyéthylène, PMMA et leurs potentielles combinaisons.

Le film décoratif 22 est disposé dans une première cavité de moulage, et plus particulièrement uniquement sur l'une des surfaces de la première cavité de moulage.

Le premier matériau est ensuite injecté dans ladite première cavité de moulage, de préférence sous forme fondue, et vient au contact du film décoratif 22, et notamment au dos du film décoratif 22.

En se refroidissant, le premier matériau de moulage se solidifie dans la première cavité de moulage, formant ainsi la première partie 12. Le cas échéant, le film décoratif 22 est adhéré au premier matériau et recouvre ainsi la surface avant 20 de la première partie 12.

Le procédé de fabrication comprend une deuxième étape de moulage de la deuxième partie 14 de l'élément de garnissage 10.

De préférence, la deuxième étape de moulage est également une étape de moulage par injection.

A cet effet, le deuxième matériau est de préférence un matériau thermoplastique et est plus particulièrement choisi parmi le polycarbonate, l'acrylonitrile butadiène styrène, le polyamide, polypropylène, polyéthylène, PMMA et leurs potentielles combinaisons.

Le deuxième matériau est injecté dans une deuxième cavité de moulage, de préférence sous forme fondue, et vient en se solidifiant former la deuxième partie 14 de l'élément de garnissage 10.

De préférence, la première cavité de moulage de la première partie 12 et la deuxième cavité de moulage de la deuxième partie 14 sont définies dans un même moule.

Avantageusement, la deuxième étape de moulage est réalisée en surmoulant la deuxième partie 14 sur la première partie 12 moulée préalablement.

A cet effet, après la première étape de moulage, la première partie 12 de l'élément de garnissage 10 est laissée en position dans le moule et définit une partie de la deuxième cavité de moulage dans laquelle est injectée le deuxième matériau de sorte à former la deuxième partie 14 de l'élément de garnissage 10.

En variante, la première étape de moulage est réalisée en surmoulant la première partie 12 sur la deuxième partie 14 moulée préalablement.

Après la première et la deuxième étape de moulage réalisées successivement, la première partie 12 et la deuxième partie 14 sont adjacentes et jointives.

De préférence, la surface avant 20 de la première partie 12 et la surface avant 24 de la deuxième partie 14 sont adjacentes et jointives.

Avantageusement, le surmoulage de l'une des parties sur l'autre permet de réaliser les surfaces avant 20, 24 des deux parties 12, 14 jointives, i.e. présentant entre elles un jeu sensiblement nul.

Alternativement, la surface avant 20 de la première partie 12 et la surface avant 24 de la deuxième partie 14 sont décalées en hauteur, par exemple d'une hauteur inférieure à 1 mm.

Le procédé de fabrication comprend, ensuite, une étape de surmoulage de la couche de revêtement 16 par moulage du matériau de revêtement en regard des surfaces avant 20, 24 de la première partie 12 et de la deuxième partie 14, et plus particulièrement recouvrant la jonction 26 entre les deux parties 12, 14.

De préférence, cette étape de surmoulage est une étape de moulage par injection du matériau de revêtement sur les surfaces avant 20, 24 de la première partie 12 et de la deuxième partie 14, plus particulièrement dans une troisième cavité de moulage.

La troisième cavité de moulage est avantageusement réalisée dans le même moule que les première et deuxième cavités de moulage.

Dans le mode de réalisation préféré de l'invention dans lequel le matériau de revêtement est un polyuréthane, deux composants, notamment un pré-polymère, comme du polyol par exemple, et un agent catalyseur, comme de l'isocynate par exemple, sont par exemple injectés dans la troisième cavité de moulage sous forme liquide, puis se solidifie par réticulation formant ainsi la couche de revêtement 16.

De préférence, l'étape de surmoulage comprend la formation des motifs en relief 32 sur la surface extérieure 30 de la couche de revêtement 16.

A cet effet, l'empreinte de chaque motif en relief 32 est de préférence ménagée dans la troisième cavité de moulage.

Les composants injectés sous forme liquide viennent se loger dans les empreintes des motifs en relief 32 définies dans la troisième cavité de moulage, formant ainsi après réticulation les motifs en relief 32 sur la surface extérieure 30 de la couche de revêtement 16.

Optionnellement, le procédé de fabrication comprend également une étape de fraisage de l'élément de garnissage 10, dans le but notamment d'améliorer l'aspect esthétique de l'élément de garnissage 10.

Par étape de fraisage, on entend un enlèvement de matière par rotation d'un outil de coupe et l'avancement de la pièce, ici l'élément de garnissage 10.

De préférence, ladite étape de fraisage est réalisée dans le but d'enlever de la matière du pourtour de l'élément de garnissage 10, et notamment d'enlever le premier matériau de la première partie 12 et/ou le deuxième matériau de la deuxième partie 14 formant le pourtour de l'élément de garnissage 10 et qui n'a pas été recouvert de matériau de revêtement 16.

Un tel élément de garnissage 10 ainsi fabriqué comprend par exemple une partie définissant une interface homme-machine et une partie décorative et présente un aspect extérieur satisfaisant.

En effet, la couche de revêtement 16, notamment recouvrant la jonction 26 entre les deux parties 12, 14, permet de donner une illusion de continuité entre les deux parties.

La formation de motifs en relief 32 sur la couche de revêtement 16 améliore également l'aspect extérieur.

De plus, de par sa composition notamment en polyuréthane, la couche de revêtement 16 protège les surfaces avant 20, 24 des deux parties 12, 14, notamment du vieillissement et du jaunissement.

En outre, le fait que les surfaces avant 20, 24 soient jointives améliore également la résistance de l'élément de garnissage 10.

De plus, un tel procédé de fabrication réduit le nombre d'étapes de procédé, comme par exemple les étapes d'assemblage et de peinture. En effet, la couche de revêtement 16 donne un aspect satisfaisant à l'élément de garnissage 10, par exemple faire ressortir l'aspect brillant souhaité de la deuxième partie 14, et protège les surfaces avant 20, 24. Une étape de peinture n'est ainsi pas nécessaire.

En outre, comme les trois étapes de moulage peuvent être réalisées dans le même moule, un tel procédé de fabrication est également économique et demande peu d'investissements machine.

## Revendications

1. Procédé de fabrication d'un élément de garnissage intérieur (10) de véhicule, le procédé de fabrication comprenant:
- une première étape de moulage d'une première partie (12) de l'élément de garnissage (10) par moulage d'un premier matériau de moulage, la première partie (12) comprenant une surface avant (20),
- une deuxième étape de moulage d'une deuxième partie (14) de l'élément de garnissage (10) par moulage d'un deuxième matériau de moulage, la deuxième partie (14) comprenant une surface avant (24), et
- une étape de surmoulage d'une couche de revêtement (16) par moulage d'un matériau de revêtement en regard des surfaces avant (20, 24) de la première partie (12) et de la deuxième partie (14) moulées préalablement, la première partie (12) et la deuxième partie (14) étant adjacentes et jointives, la couche de revêtement (16) recouvrant la jonction (26) entre la première partie (12) et de la deuxième partie (14), **caractérisé en ce que**
la première partie (12) définit une interface homme-machine munie d'une ou plusieurs zones d'interaction (18).

2. Procédé de fabrication selon la revendication 1, dans lequel le matériau de revêtement est du polyuréthane.

3. Procédé de fabrication selon la revendication 1 ou 2, dans lequel la première étape de moulage comprend le moulage du premier matériau au dos d'un film décoratif (22), de sorte que le film décoratif (22) recouvre la surface avant (20) de la première partie (12).

4. Procédé de fabrication selon l'une quelconque des revendications précédentes, dans lequel la deuxième étape de moulage est réalisée en surmoulant la deuxième partie (14) sur la première partie (12) moulée préalablement ou la première étape de moulage est réalisée en surmoulant la première partie (12) sur la deuxième partie (14) moulée préalablement.

5. Procédé de fabrication selon la revendication 4, dans lequel une première cavité de moulage de la première partie (12) et une deuxième cavité de moulage de la deuxième partie (14) sont définies dans un même moule.

6. Procédé de fabrication selon l'une quelconque des revendications précédentes, dans lequel le premier matériau de moulage et/ou le deuxième matériau de moulage est choisi parmi le polycarbonate, l'acrylonitrile butadiène styrène, le polyamide, polypropylène, polyéthylène, PMMA et leurs potentielles combinaisons.

7. Procédé de fabrication selon l'une quelconque des revendications précédentes, dans lequel l'étape de surmoulage de la couche de revêtement (16) comprend la formation de motifs en relief (32) sur une surface extérieure (30) de la couche de revêtement (16) tournée à l'opposé de la première partie (12) et de la deuxième partie (14).

8. Elément de garnissage intérieur d'un véhicule, l'élément de garnissage intérieur (10) comprenant :
- une première partie (12) réalisée en un premier matériau et comprenant une surface avant (20),
- une deuxième partie (14) réalisée en un deuxième matériau, comprenant une surface avant (24), et étant adjacente à et jointive avec la première partie (12), et
- une couche de revêtement (16) en regard des surfaces avant (20, 24) de la première partie (12) et de la deuxième partie (14) de l'élément de garnissage (10), la couche de revêtement (16) recouvrant la jonction (26) entre la première partie (12) et la deuxième partie (14), **caractérise en ce que**
la première partie (12) définit une interface homme-machine munie d'une ou plusieurs zones d'interaction (18).

9. Elément de garnissage intérieur d'un véhicule selon la revendication 8, dans lequel la couche de revêtement (16) comprend des motifs en relief (32) sur une surface extérieure (30) de la couche de revêtement (16) tournée à l'opposé de la première partie (12) et de la deuxième partie (14).

10. Elément de garnissage selon la revendication 8 ou 9, dans lequel le matériau de revêtement est du polyuréthane;

11. Elément de garnissage selon l'une quelconque des revendications 8 à 10, dans lequel la surface avant de la première partie (12) est au moins partiellement recouverte d'un film décoratif.

12. Elément de garnissage selon l'une quelconque des revendications 8 à 11, dans lequel le premier matériau de moulage et/ou le deuxième matériau de moulage est choisi parmi le polycarbonate, l'acrylonitrile butadiène styrène, le polyamide, polypropylène, polyéthylène, PMMA et leurs potentielles combinaisons

## Patentansprüche

1. Verfahren zum Herstellen eines Fahrzeuginnenverkleidungselements (10), wobei das Herstellungsverfahren umfasst:
- einen ersten Schritt des Formens eines ersten Abschnitts (12) des Verkleidungselements (10) durch Formen eines ersten Formmaterials, wobei der erste Abschnitt (12) eine Vorderfläche (20) umfasst,
- einen zweiten Schritt des Formens eines zweiten Abschnitts (14) des Verkleidungselements (10) durch Formen eines zweiten Formmaterials, wobei der zweite Abschnitt (14) eine Vorderfläche (24) umfasst, und
- einen Schritt des Umspritzens einer Beschichtungsschicht (16) durch Formen eines Beschichtungsmaterials, das den Vorderflächen (20, 24) des zuvor geformten ersten Abschnitts (12) und des zweiten Abschnitts (14) zugewandt ist, wobei der erste Abschnitt (12) und der zweite Abschnitt (14) aneinander angrenzend und anliegend sind, wobei die Beschichtungsschicht (16) die Verbindungsstelle (26) zwischen dem ersten Abschnitt (12) und dem zweiten Abschnitt (14) bedeckt, **dadurch gekennzeichnet, dass** der erste Abschnitt (12) eine Mensch-Maschine-Schnittstelle definiert, die mit einer oder mehreren Interaktionszonen (18) versehen ist.

2. Herstellungsverfahren nach Anspruch 1, wobei das Beschichtungsmaterial Polyurethan ist.

3. Herstellungsverfahren nach Anspruch 1 oder 2, wobei der erste Formschritt das Formen des ersten Materials auf der Rückseite einer Dekorfolie (22) umfasst, so dass die Dekorfolie (22) die Vorderseite (20) des ersten Abschnitts (12) bedeckt.

4. Herstellungsverfahren nach einem der vorhergehenden Ansprüche, wobei der zweite Formschritt durch Umspritzen des zweiten Abschnitts (14) auf den zuvor geformten ersten Abschnitt (12) durchgeführt wird oder der erste Formschritt durch Umspritzen des ersten Abschnitts (12) auf den zuvor geformten zweiten Abschnitt (14) durchgeführt wird.

5. Herstellungsverfahren nach Anspruch 4, wobei ein erster Formhohlraum des ersten Abschnitts (12) und ein zweiter Formhohlraum des zweiten Abschnitts (14) in derselben Form definiert sind.

6. Herstellungsverfahren nach einem der vorhergehenden Ansprüche, wobei das erste Formmaterial und/oder das zweite Formmaterial aus Polycarbonat, Acrylnitril-Butadien-Styrol, Polyamid, Polypropylen, Polyethylen, PMMA und möglichen Kombinationen davon ausgewählt ist.

7. Herstellungsverfahren nach einem der vorhergehenden Ansprüche, wobei der Schritt des Umspritzens der Beschichtungsschicht (16) das Bilden erhabener Muster (32) auf einer Außenfläche (30) der Beschichtungsschicht (16) umfasst, die von dem ersten Abschnitt (12) und dem zweiten Abschnitt (14) abgewandt ist.

8. Innenverkleidungselement für ein Fahrzeug, wobei das Innenverkleidungselement (10) umfasst:
- einen ersten Abschnitt (12), der aus einem ersten Material hergestellt ist und eine Vorderfläche (20) umfasst,
- einen zweiten Abschnitt (14), der aus einem zweiten Material hergestellt ist, eine Vorderfläche (24) umfasst, und an den ersten Abschnitt (12) angrenzt und anliegt, und
- eine Beschichtungsschicht (16), die den Vorderflächen (20, 24) des ersten Abschnitts (12) und des zweiten Abschnitts (14) des Verkleidungselements (10) zugewandt ist, wobei die Beschichtungsschicht (16) die Verbindungsstelle (26) zwischen dem ersten Abschnitt (12) und dem zweiten Abschnitt (14) bedeckt, **dadurch gekennzeichnet, dass** der erste Abschnitt (12) eine Mensch-Maschine-Schnittstelle definiert, die mit einer oder mehreren Interaktionszonen (18) versehen ist.

9. Innenverkleidungselement für ein Fahrzeug nach Anspruch 8, wobei die Beschichtungsschicht (16) erhabene Muster (32) auf einer Außenfläche (30) der Beschichtungsschicht (16) umfasst, die vom ersten Abschnitt (12) und vom zweiten Abschnitt (14) abgewandt ist.

10. Verkleidungselement nach Anspruch 8 oder 9, wobei das Beschichtungsmaterial Polyurethan ist.

11. Verkleidungselement nach einem der Ansprüche 8 bis 10, wobei die Vorderseite des ersten Abschnitts (12) mindestens teilweise mit einer Dekorfolie bedeckt ist.

12. Verkleidungselement nach einem der Ansprüche 8 bis 11, wobei das erste Formmaterial und/oder das zweite Formmaterial ausgewählt ist aus Polycarbonat, Acrylnitril-Butadien-Styrol, Polyamid, Polypropylen, Polyethylen, PMMA und möglichen Kombinationen davon.

## Claims

1. Method for manufacturing a vehicle interior trim element (10), the manufacturing method comprising:
- a first step of molding a first portion (12) of the trim element (10) by molding a first molding material, the first portion (12) comprising a front surface (20),
- a second step of molding a second portion (14) of the trim element (10) by molding a second molding material, the second portion (14) comprising a front surface (24), and
- a step of overmolding a coating layer (16) by molding a coating material facing the front surfaces (20, 24) of the previously molded first portion (12) and the second portion (14), the first portion (12) and the second portion (14) being adjacent and contiguous, the coating layer (16) covering the junction (26) between the first portion (12) and the second portion (14), **characterized in that** the first portion (12) defines a man-machine interface provided with one or more interaction zones (18).

2. Manufacturing method according to claim 1, wherein the coating material is polyurethane.

3. Manufacturing method according to claim 1 or 2, wherein the first molding step comprises molding the first material on the back of a decorative film (22) such that the decorative film (22) covers the front surface (20) of the first portion (12).

4. Manufacturing method according to any of the preceding claims, wherein the second molding step is performed by overmolding the second portion (14) onto the previously molded first portion (12) or the first molding step is performed by overmolding the first portion (12) onto the previously molded second portion (14).

5. Manufacturing method according to claim 4, wherein a first mold cavity of the first portion (12) and a second mold cavity of the second portion (14) are defined in the same mold.

6. Manufacturing method according to any of the preceding claims, wherein the first molding material and/or the second molding material is selected from polycarbonate, acrylonitrile butadiene styrene, polyamide, polypropylene, polyethylene, PMMA and potential combinations thereof.

7. Manufacturing method according to any of the preceding claims, wherein the step of overmolding the coating layer (16) comprises forming raised patterns (32) on an outer surface (30) of the coating layer (16) facing away from the first portion (12) and the second portion (14).

8. Interior trim element for a vehicle, the interior trim element (10) comprising:
- a first portion (12) made of a first material and comprising a front surface (20),
- a second portion (14) made of a second material, comprising a front surface (24), and being adjacent to and contiguous with the first portion (12), and
- a coating layer (16) facing the front surfaces (20, 24) of the first portion (12) and the second portion (14) of the trim element (10), the coating layer (16) covering the junction (26) between the first portion (12) and the second portion (14), **characterized in that** the first portion (12) defines a man-machine interface provided with one or more interaction zones (18).

9. Interior trim element for a vehicle according to claim 8, wherein the coating layer (16) comprises raised patterns (32) on an outer surface (30) of the coating layer (16) facing away from the first portion (12) and the second portion (14).

10. Trim element according to claim 8 or 9, wherein the coating material is polyurethane.

11. Trim element according to any of claims 8 to 10, wherein the front surface of the first portion (12) is at least partially covered with a decorative film.

12. Trim element according to any of claims 8 to 11, wherein the first molding material and/or the second molding material is selected from polycarbonate, acrylonitrile butadiene styrene, polyamide, polypropylene, polyethylene, PMMA and potential combinations thereof.
